# EUROPEAN PATENT SPECIFICATION

(11) **EP 2 233 341 B1**
(45) Date of publication and mention of the grant of the patent: **25.02.2015**
(21) Application number: 10156442.5
(22) Date of filing: 12.03.2010
(51) Int. Cl.: B60K 11/08, F01P 7/10, F01P 11/10

(54) **Drive unit for movable member**
Unité de commande pour élément mobile
Antriebselement für ein bewegliches Glied

(30) Priority: 25.03.2009 JP 2009074669
(43) Date of publication of application: 29.09.2010
(73) Proprietor: Aisin Seiki Kabushiki Kaisha, Aichi-ken 448-8650 (JP)
(72) Inventor: Sakai, Morio, Kariya-shi Aichi-ken 448-8650 (JP)
(74) Representative: Pautex Schneider, Nicole Véronique

(56) References cited:
- US-A- 4 475 485
- US-A- 4 779 577

## Description

### TECHNICAL FIELD

This disclosure relates to a drive unit for a movable member.

### BACKGROUND DISCUSSION

A known drive unit for a movable member includes the movable member adjusting aerodynamic characteristics of a vehicle while the movable member is changing its position, an electric motor operating the movable member, preventing means preventing the movable member from operating beyond a specified operating range by contacting with the movable member, and controlling means supplying an electric power to the electric motor for a predetermined time to thereby operate the movable member from a first end to a second end of the specified operating range.

A drive unit for a movable fin is provided at a radiator grille for a vehicle as an example of the aforementioned drive unit for the movable member. The movable fin serves as an example of the movable member adjusting aerodynamic characteristics of the vehicle while changing a position. The movable fin adjusts an air penetration to an engine compartment from a front portion of the vehicle that is being driven, thereby applying an air resistance, a lift force, or a down force to the vehicle. A stable driving state of the vehicle is thus ensured. The movable fin is rotatable within a specified operating range defined by a fully closed position (i.e., one of a first end and a second end) where the air penetration to the engine compartment is prohibited and a fully open position (i.e., the other one of the first end and the second end) where the air penetration to the engine compartment is permitted. The rotation of the movable fin beyond the specified operating range is prevented by preventing means that make contact with the movable fin. Without an installation of a sensor that detects the rotation of the movable fin from the first end to the second end of the specified operating range, the movable fin is rotatable from the first end to the second end by the power supply to the electric motor for a predetermined time (for example, see JP2008-6855A). However, according to such known drive unit, an abnormality (i.e., an abnormal operation) of the movable member may not be detected or identified. For example, it may be impossible to detect the abnormal operation such as that the movable member is not completely rotated to the second end of the specified operating range even by the power supply to the electric motor for a predetermined time, and that the electric motor is continuously supplied with power even after the movable member is completely rotated to the second end of the specified operating range because a time period during which the movable member is rotated from the first end to the second end is short.

In order to overcome the aforementioned issue, it is considerable to provide a sensor for detecting the complete rotation of the movable member from the first end to the second end of the specified operating range. Then, the abnormality of the movable member is determinable on the basis of a detection timing of the sensor. However, in such case, an advantage that the movable member is rotatable from the first end to the second end of the specified operating range without an installation of a sensor is not achievable.

A need thus exists for a drive unit for a movable member which detects an abnormal operation of the movable member and which achieves an operation of the movable member from a first end to a second end of a specified operating range without an installation of a sensor.

Document US 4 779 577 A discloses the preamble of claim 1.

### SUMMARY

According to an aspect of this disclosure, a drive unit for a movable member includes the movable member adjusting aerodynamic characteristics of a vehicle while the movable member is changing a position thereof, an electric motor operating the movable member, preventing means preventing the movable member from operating beyond a specified operating range by making contact with the movable member, controlling means supplying an electric power to the electric motor for a predetermined time and operating the movable member from a first end to a second end of the specified operating range, and abnormality determining means measuring a time period from a start of a power supply to the electric motor to a detection of a lock current generated at the electric motor by a prevention of an operation of the movable member and determining that an abnormality is present at the movable member in a case where the measured time period deviates from a reference time range.

According to the aforementioned disclosure, at a time when the electric power is supplied to the electric motor for the predetermined time, a time period required for the movable member to rotate from the first end to the second end is measured as the time period from the start of the power supply to the electric motor to the detection of the lock current. Then, the determination of whether or not the abnormality is present at the movable member is determinable on the basis of whether or not the aforementioned measured time period deviates from the reference time range.

In addition, the movable member includes a movable fin adjusting an air penetration to an engine compartment from a front portion of the vehicle, and the abnormality determining means correct the reference time range based on an external factor that affects an operating speed of the movable fin.

Accordingly, based on the external factor that affects the operating speed of the movable fin, at least a lower time limit of the reference time range is corrected to be reduced when the operating speed of the movable fin increases, and at least an upper time limit of the reference time range is corrected to be elongated when the operating speed of the movable fin decreases. As a result, whether or not the abnormality is present at the movable fin that adjusts the air penetration to the engine compartment is accurately determined.

Further, the external factor includes a power supply voltage of the electric motor, and the abnormality determining means perform a correction to decrease a lower time limit of the reference time range in a case where the power supply voltage is greater than a reference voltage and perform a correction to increase an upper time limit of the reference time range in a case where the power supply voltage is smaller than the reference voltage.

Accordingly, in a case where the power supply voltage is greater than the reference voltage and thus the operating speed of the movable fin driven by the electric motor is slow, and in a case where the power supply voltage is smaller than the reference voltage and thus the operating speed of the movable fin driven by the electric motor is fast, it is accurately detectable whether or not the abnormality is present at the movable fin.

Furthermore, the abnormality determining means determine the reference time range based on a correlation map between a driving speed of the vehicle and the reference time range of the movable member depending on the driving speed of the vehicle.

Accordingly, the reference time range depending on the driving speed of the vehicle (i.e., the vehicle speed) is obtained from the correlation map while the vehicle is being driven to thereby achieve the corrected reference time range depending on the driving speed. Thus, the reference time range is determined on the basis of the driving speed of the vehicle while the vehicle is being driven so as to accurately detect whether or not the abnormality is present at the movable member.

Furthermore, the external factor includes an outside air temperature, and the abnormality determining means perform a correction to increase the upper time limit of the reference time range in a case where the outside air temperature is greater than a reference temperature and perform a correction to decrease the lower time limit of the reference time range in a case where the outside air temperature is smaller than the reference temperature.

A magnetic flux density, where the armature coil of the electric motor passes over, decreases along with the increase of the outside air temperature. Thus, a rotating torque generated at the armature coil decreases, thereby increasing the operating time of the movable fin over the specified operating range. Then, according to the disclosure, at least the upper time limit of the reference time range is corrected to be elongated when the rotating torque of the electric motor decreases because of the higher outside air temperature than the reference temperature and at least the lower time limit is corrected to be reduced when the rotating torque of the electric motor increases because of the lower outside air temperature than the reference temperature. Consequently, on the basis of variations of the operating time of the movable fin over the specified operating range caused by the outside air temperature, it is accurately detectable whether or not the abnormality is present at the movable fin in a case where the outside air temperature is greater than the reference temperature or smaller than the reference temperature.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a cross-sectional view of an engine compartment for a vehicle according to first and second embodiments disclosed here;

Fig. 2 is another cross-sectional view of the engine compartment according to the embodiments disclosed here;

Fig. 3 is a block diagram of a control unit (controlling means) according to the embodiments disclosed here;

Fig. 4 is a flowchart illustrating a control by a central processing unit according to the embodiments disclosed here;

Fig. 5 is a flowchart illustrating an abnormality determination process according to the first embodiment disclosed here;

Fig. 6 is a graph illustrating a correlation between a voltage difference and a voltage correction time according to the embodiments disclosed here;

Fig. 7 is a graph illustrating a correlation between a temperature difference and a temperature correction time according to the first embodiment disclosed here;

Fig. 8 is a graph illustrating current-voltage characteristics according to the embodiments disclosed here; and

Fig. 9 is a graph illustrating a correlation between a driving speed of the vehicle and a reference time range according to the second embodiment disclosed here.

### DETAILED DESCRIPTION

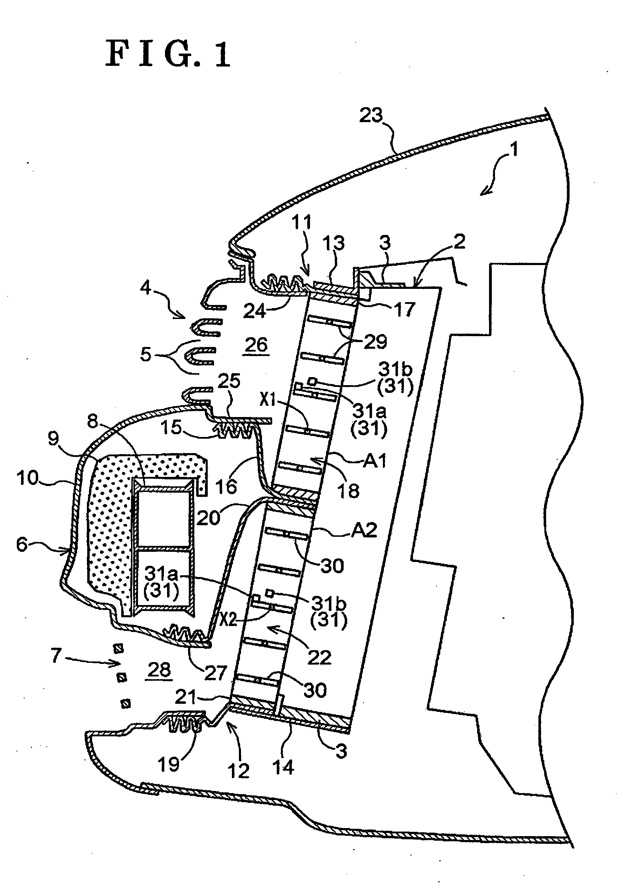

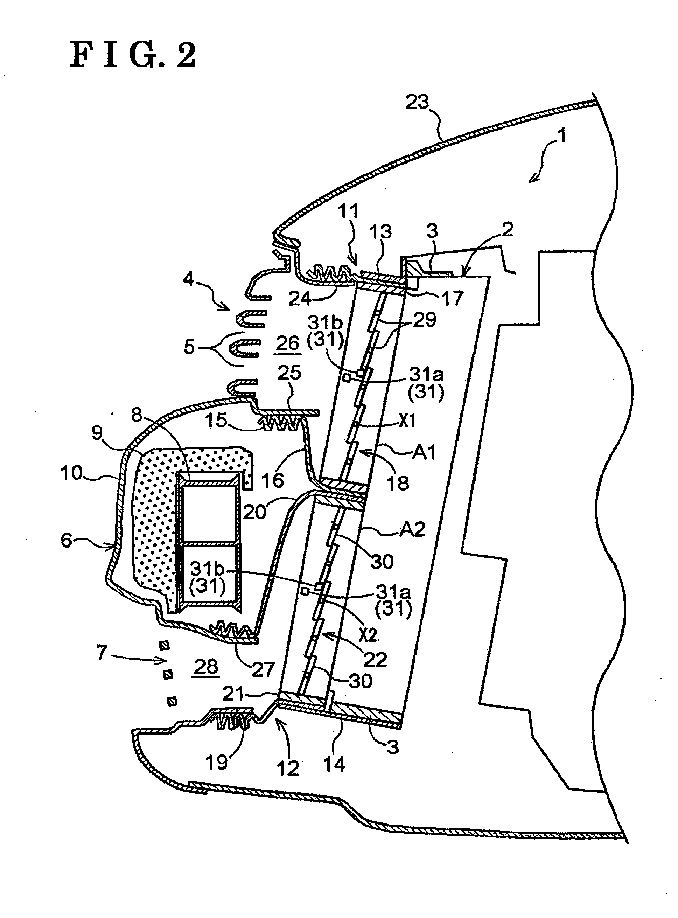

A first embodiment disclosed here will be explained with reference to the attached drawings. As illustrated in Figs. 1 and 2, an engine compartment 1 provided at a front portion of a vehicle accommodates a radiator 2 that cools an engine cooling water. The radiator 2 is attached to a vehicle body 3. In Figs. 1 and 2, each leftward direction thereof corresponds to a front side of the vehicle while each rightward direction corresponds to a rear side of the vehicle.

An ornamental grille 4 is provided at a front side of the radiator 2. The ornamental grille 4 includes a first grille opening portion 5 opening and arranged above a bumper 6 and a second grille opening portion 7 opening and arranged below the bumper 6.

A bumper reinforcement member 8 is arranged between the first grille opening portion 5 and the second grille opening portion 7 at the front side of the radiator 2. The bumper reinforcement member 8 is attached to the vehicle body 3. A foam shock absorber 9 is provided at a front of the bumper reinforcement member 8. Then, a resin covering material 10 of the bumper 6 is provided to cover the shock absorber 9.

A first case 11 and a second case 12 are arranged, being adjoined to each other in front of the radiator 2 in such a manner that the first case 11 is positioned above the second case 12 in a vertical direction of the vehicle. The first case 11 and the second case 12 are attached to the vehicle body 3 via brackets 13 and 14, respectively.

The first case 11 includes a first body frame 16 of which an end is formed by a first bellows portion 15 and a first case frame 17 fixed to an inner side of the first body frame 16. Then, a first airflow passage 18 is formed at an inner side of the first case frame 17 so as to surround or cover the front upper portion of the radiator 2. The first airflow passage 18 is elongated in a width direction of the vehicle so as to have substantially a rectangular shape in a cross section (i.e., when viewed from a side of the vehicle).

The second case 12 includes a second body frame 20 of which an end is formed by a second bellows portion 19 and a second case frame 21 fixed to an inner side of the second body frame 20. Then, a second airflow passage 22 is formed at an inner side of the second case frame 21 so as to surround or cover the front lower portion of the radiator 2. The second airflow passage 22 is elongated in the width direction of the vehicle so as to have substantially a rectangular shape in a cross section (i.e., when viewed from a side of the vehicle).

A wall member 24 that extends from a hood surrounding member 23 is connected to an inner upper portion of the first bellows portion 15 while an upper wall 25 of the bumper 6 is connected to an inner lower portion of the first bellows portion 15. As a result, a first air inflow passage 26 is formed from the first grille opening portion 5 to the front upper portion of the radiator 2.

An opening end portion 27 formed at the second grille opening portion 7 is fitted to an inner portion of the second bellows portion 19. Accordingly, a second air inflow passage 28 is formed from the second grille opening potion 7 to the front lower portion of the radiator 2.

A first movable louver shutter device (a first shutter device) A1 and a second movable louver shutter device (a second shutter device) A2 each serving as an example of a drive unit for a movable member according to the embodiments are mounted at the first case frame 17 and the second case frame 21, respectively.

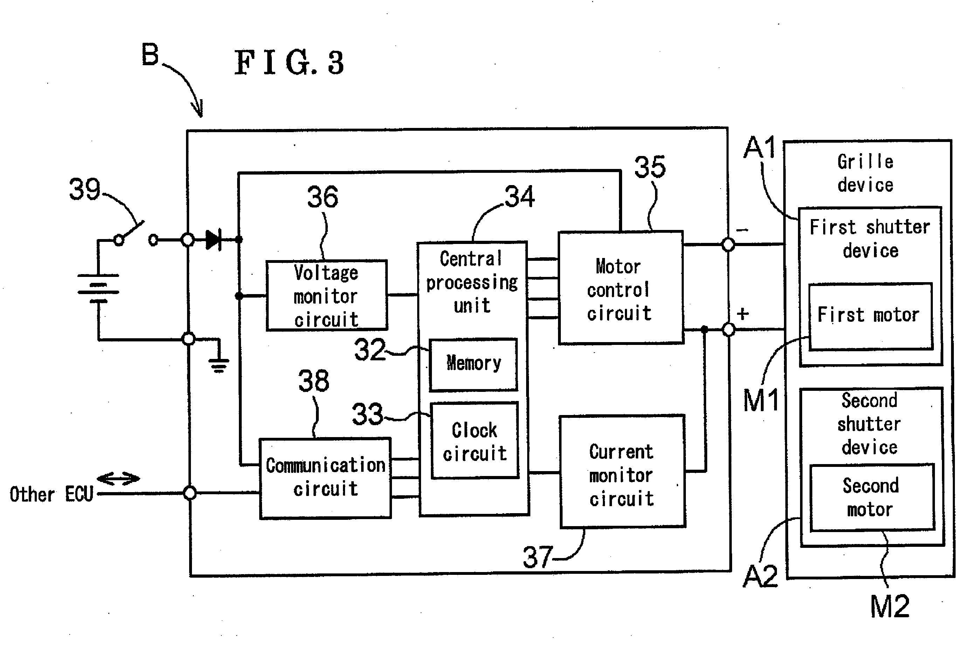

The first movable louver shutter device A1 includes multiple first movable fins 29, each serving as an example of the movable member, arranged within the first airflow passage 18 at intervals in a vertical direction of the vehicle. The first movable louver shutter device A1 also includes a direct current electric motor having a reduction gear (hereinafter referred to as a first motor) M1 (see Fig. 3) that drives the multiple first movable fins 29 to integrally rotate about respective lateral axes X1 thereof along the width direction of the vehicle.

The first movable fins 29 collectively rotate within a specified operating range that is defined between a fully open position (i.e., one of a first end and a second end) as illustrated in Fig. 1 where the air penetration from the first airflow passage 18 to the engine compartment 1 is permitted and a fully closed position (i.e., the other one of the first end and the second end) as illustrated in Fig. 2 where the air penetration to the engine compartment 1 is prohibited.

The rotation of the first movable fins 29 from the first end to the second end of the specified operating range achieves an adjustment of the air penetration to the engine compartment 1 from the front portion of the vehicle through the first air inflow passage 26.

The second movable louver shutter device A2 includes multiple second movable fins 30, each serving as an example of the movable member, arranged within the second airflow passage 22 at intervals in the vertical direction of the vehicle. The second movable louver shutter device A2 also includes a direct current electric motor having a reduction gear (hereinafter referred to as a second motor) M2 (see Fig. 3) that drives the multiple second movable fins 30 to integrally rotate about respective lateral axes X2 thereof along the width direction of the vehicle.

Both ends of each of the first movable fins 29 in the width direction of the vehicle are rotatably supported by both side portions of the first case frame 17 in the width direction. In addition, both ends of each of the second movable fins 30 in the width direction of the vehicle are rotatably supported by both side portions of the second case frame 21 in the width direction. The first motor M1 and the second motor M2 are both driven by a battery serving as a driving power source mounted on the vehicle.

The second movable fins 30 collectively rotate within a specified operating range that is defined between a fully open position (i.e., one of a first end and a second end) as illustrated in Fig. 1 where the air penetration from the second airflow passage 22 to the engine compartment 1 is permitted and a fully closed position (i.e., the other of the first end and the second end) as illustrated in Fig. 2 where the air penetration to the engine compartment 1 is prohibited.

The rotation of the second movable fins 30 from the first end to the second end of the specified operating range achieves an adjustment of the air penetration to the engine compartment 1 from the front portion of the vehicle through the second air inflow passage 28.

Preventing means 31 are provided in a projecting manner at one of the side portions of the first case frame 17. The preventing means 31 prevent all of the first movable fins 29 from operating beyond the specified operating range by making contact with one of the first movable fins 29. In the same way, the preventing means 31 are provided in a projecting manner at one of the side portions of the second case frame 21. The preventing means 31 prevent all of the second movable fins 30 from operating beyond the specified operating range by making contact with one of the second movable fins 30.

The preventing means 31 include first preventing devices 31 a and second preventing devices 31b. The first preventing devices 31 a make contact with one of the first movable fins 29 in the fully open position and/or one of the second movable fins 30 in the fully open position to thereby prevent all of the first movable fins 29 and/or all of the second movable fins 30 from moving beyond the fully open position. The second preventing devices 31 b make contact with one of the first movable fins 29 in the fully closed position and/or one of the second movable fins 30 in the fully closed position to thereby prevent all of the first movable fins 29 and/or all of the second movable fins 30 from moving beyond the fully closed position.

The first movable fins 29 being collectively in the fully open position are arranged at horizontal angular positions and in parallel to one another as illustrated in Fig. 1 to thereby open the first airflow passage 18. In the same manner, the second movable fins 30 being collectively in the fully open position are arranged at horizontal angular positions and in parallel to one another as illustrated in Fig. 1 to thereby open the second airflow passage 22.

The first movable fins 29 being collectively in the closed position are arranged at angular positions where end portions of the first movable fins 29 adjacent to each other are positioned close to each other as illustrated in Fig. 2 to thereby close the first airflow passage 18. In the same manner, the second movable fins 30 being collectively in the closed position are arranged at angular positions where end portions of the second movable fins 30 adjacent to each other are positioned close to each other as illustrated in Fig. 2 to thereby close the second airflow passage 22.

The first movable fins 29 provided at the first movable louver shutter device A1 are separately or individually driven to rotate to one of the fully open position and the fully closed position from the second movable fins 30 that are provided at the second movable louver shutter device A2 and driven to rotate to one of the fully open position and the fully closed position. For example, the first movable fins 29 are rotated to the fully closed position while the second movable fins 30 are rotated to the fully open position, thereby adjusting the air penetration to the engine compartment 1 from the front portion of the vehicle in the driving state.

As mentioned above, the first movable fins 29 and the second movable fins 30 are examples of the movable members that adjust aerodynamic characteristics of the vehicle while the first movable fins 29 and the second movable fins 30 are changing their positions. The first movable fins 29 and the second movable fins 30 adjust the air penetration to the engine compartment 1 from the front portion of the vehicle to thereby apply an air resistance, a lift force, or a down force to the vehicle that is being driven. The stable driving state of the vehicle is ensured accordingly.

That is, in a case where the first movable fins 29 and the second movable fins 30 are all rotated to the fully closed position, the air resistance (i.e., air resistance coefficient) and the lift force are reduced. In addition, air in front of the vehicle flows beneath a floor surface of the vehicle, thereby generating the down force for pulling the vehicle downward.

In addition, in a case where the first movable fins 29 and the second movable fins 30 are all rotated to the fully open position, the air resistance increases and a pressure within the engine compartment 1 increases because of air inflowing thereto, thereby increasing the lift force.

In a case where the vehicle is driven at a predetermined speed, a combination of the positions of the first movable fins 29 (i.e., the fully closed position or the fully open position) and the second movable fins 30 (i.e., the fully closed position or the fully open position) is appropriately changed to thereby adjust the air resistance, the magnitude of lift force and down force, and the like.

Fig. 3 is a block diagram of a control unit B serving as controlling means that controls operations of the first motor M1 of the first movable louver shutter device A1 and the second motor M2 of the second movable louver shutter device A2.

The control unit B includes a central processing unit 34, a motor control circuit 35, a voltage monitor circuit 36, a current monitor circuit 37, and a communication circuit 38. The central processing unit 34 includes a memory 32 and a clock circuit 33. The motor control circuit 35 individually or separately controls the operations of the first motor M1 and the second motor M2. The voltage monitor circuit 36 monitors a voltage of an operational power source (i.e., a battery) for the first and second movable louver shutter devices A1 and A2. The current monitor circuit 37 monitors the electric current flowing to the first motor M1 and the electric current flowing to the second motor M2, individually or separately. The communication circuit 38 inputs vehicle information such as a driving speed, an outside air temperature, and a cooling water temperature at the radiator 2.

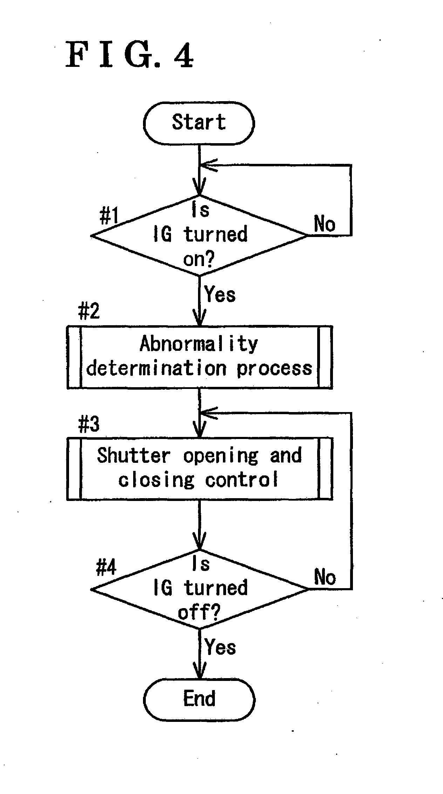

As illustrated in a flowchart in Fig. 4, in a case where it is determined that an ignition switch (IG) 39 is turned on in #1, an abnormality determination process is performed on the first movable fins 29 and on the second movable fins 30 respectively in #2. When it is determined that the abnormality is present in neither the first movable fins 29 nor the second movable fins 30, a shutter opening and closing control for controlling operations of the first and second movable louver shutter devices A1 and A2 is performed in #3 until the ignition switch is turned off in #4. In this case, the shutter opening and closing control is executed per predetermined time period or per predetermined driving distance of the vehicle.

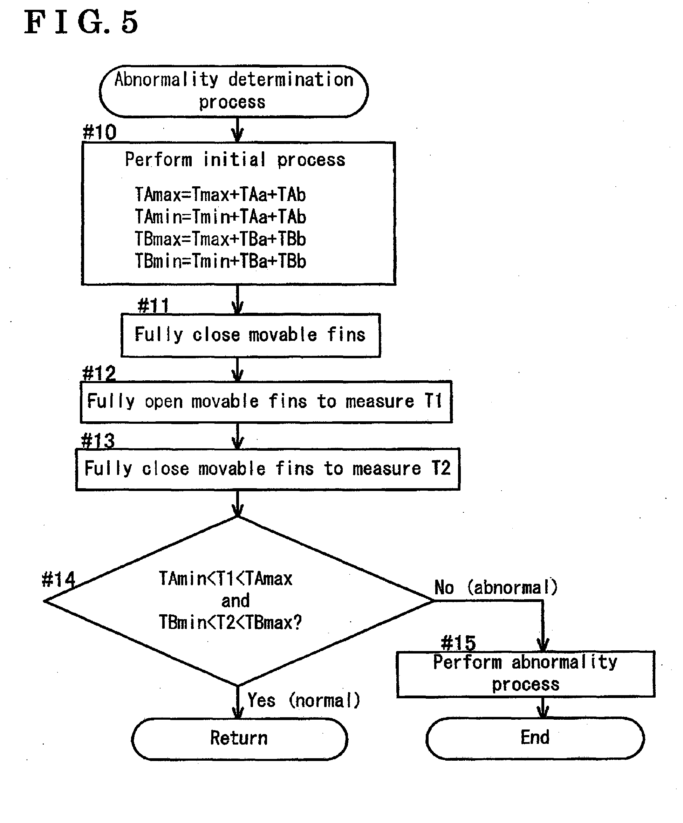

In the abnormality determination process as illustrated in Fig. 5, an operating time T1 (T2) is measured. The operating time T1 (T2) is a time period defined from the start of a power supply to the first motor M1 to a detection of a lock current generated at the first motor M1 because of a prevention of an opening operation (a closing operation) of the first movable fins 29. In addition, in a case where the thus measured operating time T1 (T2) deviates from a reference time range (specifically, a corrected reference time range) defined between an upper time limit TAmax (TBmax) and a lower time limit TAmin (TBmin), the abnormality of the movable fins 29 is determined. The abnormality determination process is also performed on the second motor M2.

The upper time limit TAmax and the lower time limit TAmin define the reference time range for the opening operation of the first movable fins 29 (the second movable fins 30) rotating from the fully closed position to the fully open position. The upper time limit TBmax and the lower time limit TBmin define the reference time range for the closing operation of the first movable fins 29 (the second movable fins 30) rotating from the fully open position to the fully closed position.

The central processing unit 34 stores beforehand in the memory 32 an abnormality determination program serving as abnormality determining means, an upper time limit Tmax and a lower time limit Tmin for defining a specified reference time range (a reference time range) specified beforehand, and a correlation between an external factor that affects an operating speed of the first movable fins 29 (the second movable fins 30) and correction times TAa, TAb, TBa and TBb.

Accordingly, the central processing unit 34 reads out the abnormality determination program, the upper time limit Tmax and the lower time limit Tmin of the specified reference time range, and the correlation between the external factor and the correction times TAa, TAb, TBa and TBb so as to execute the abnormality determination process.

The correlation between the external factor and the correction times TAa, TAb, TBa and TBb for an operation of the first movable fins 29 (the second movable fins 30) from the fully closed position to the fully open position (i.e., an opening operation) and the correlation between the external factor and the correction times TAa, TAb, TBa and TBb for an operation of the first movable fins 29 (the second movable fins 30) from the fully open position to the fully closed position (i.e., a closing operation) are respectively stored in the memory 32. The correction times TAa and TAb are related to the opening operation of the first movable fins 29 (the second movable fins 30). The correction times TBa and TBb are related to the closing operation of the first movable fins 29 (the second movable fins 30).

Fig. 5 is a flowchart of the abnormality determination process. In an initial process of the abnormality determination process in #10, the specified reference time range is corrected by an addition of the correction times TAa, TAb, TBa and TBb to the upper time limit Tmax and the lower time limit Tmin of the specified reference time range on the basis of a power supply voltage V of the first motor M1 and an outside air temperature Temp both serving as the external factor.

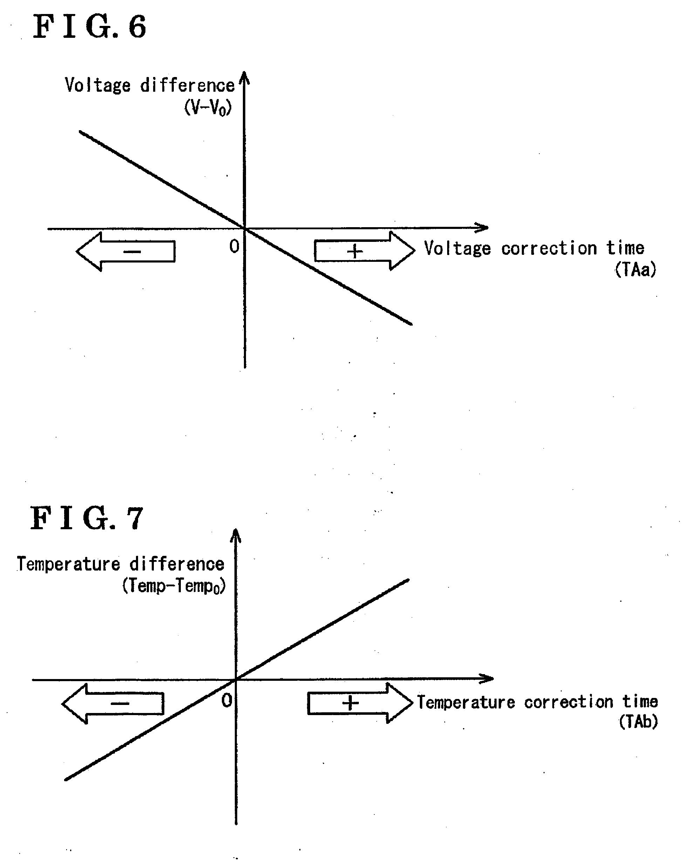

Fig. 6 illustrates a correlation between the voltage correction time TAa added to the upper time limit Tmax and the lower time limit Tmin of the specified reference time range and a voltage deference between the power supply voltage V and a reference voltage Vₒ (i.e., a voltage difference V-Vₒ) for the operating direction from the fully closed position to the fully open position. The voltage deference V-Vₒ and the voltage correction time TAa are in direct proportion to each other. A correlation between the voltage correction time TBa and the voltage difference V-Vₒ for the operating direction from the fully open position to the fully closed position only differs in a constant of proportion from that of the correlation illustrated in Fig. 6 and thus an illustration is omitted.

In a case where the power supply voltage V is greater than the reference voltage Vₒ, the voltage correction time TAa with the minus sign in response to the voltage difference V-Vₒ is added to the upper time limit Tmax and the lower time limit Tmin of the specified reference time range so that the correction is made to decrease the upper time limit Tmax and the lower time limit Tmin. In a case where the power supply voltage V is smaller than the reference voltage Vₒ, the voltage correction time TAa with the plus sign in response to the voltage difference V-Vₒ is added to the upper time limit Tmax and the lower time limit Tmin of the specified reference time range so that the correction is made to increase the upper time limit Tmax and the lower time limit Tmin.

Fig. 7 illustrates a correlation between the temperature correction time TAb added to the upper time limit Tmax and the lower time limit Tmin of the specified reference time range and a temperature difference between the outside air temperature Temp and a reference temperature Temp₀ (i.e., a temperature difference Temp-Temp₀) for the operating direction from the fully closed position to the fully open position. The temperature difference Temp-Tempo and the temperature correction time TAb are in direct proportion to each other. A correlation between the temperature correction time TBb and the temperature difference Temp-Tempo for the operating direction from the fully open position to the fully closed position only differs in a constant of proportion from that of the correlation illustrated in Fig. 7 and thus an illustration is omitted.

When the outside air temperature Temp increases relative to the reference temperature Temp₀, a magnetic flux density, where an armature coil of the first motor M1 (the second motor M2) passes over, decreases. As a result, a rotating torque of the first motor M1 (the second motor M2) decreases. Thus, the upper time limit Tmax and the lower time limit Tmin of the specified reference time range is corrected to be elongated by an addition of the temperature correction time TAb with the plus sign in response to the temperature difference Temp-Tempo. On the other hand, when the outside air temperature Temp decreases relative to the reference temperature Tempo, the magnetic flux density, where the armature coil passes over, increases. As a result, the rotating torque of the first motor M1 (the second motor M2) increases. Thus, the upper time limit Tmax and the lower time limit Tmin of the specified reference time range is corrected to be reduced by an addition of the temperature correction time TAb with the minus sign in response to the temperature difference Temp-Temp₀.

The correction on the **specified** reference time range is conducted individually on the operating direction of the first movable fins 29 (the second movable fins 30) from the fully closed position to the fully open position and on the operating direction of the first movable fins 29 (the second movable fins 30) from the fully open position to the fully closed position.

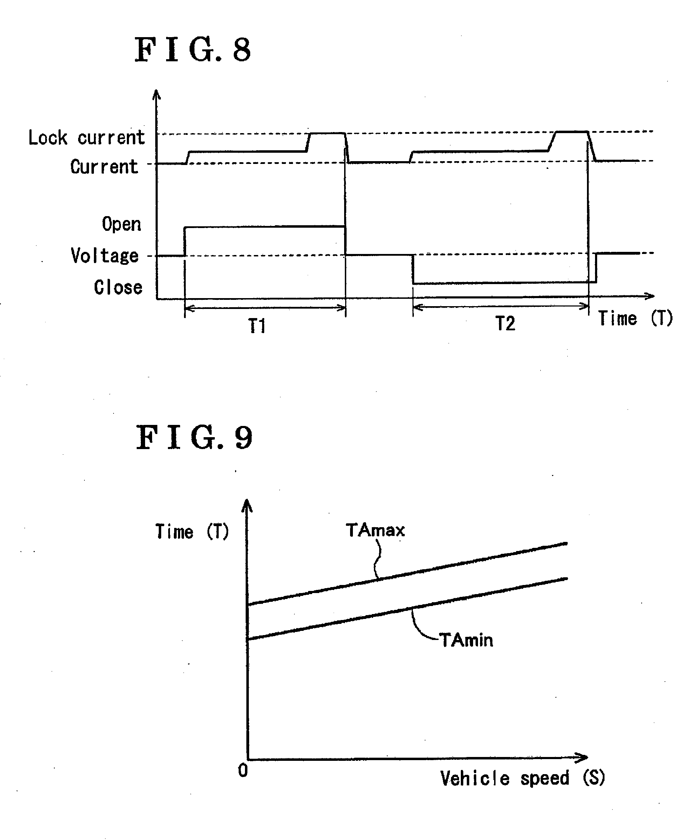

In #11, the first movable fins 29 (the second movable fins 30) are rotated to the fully closed position. Then, in #12, the first movable fins 29 (the second movable fins 30) are rotated to the fully open position so as to measure the operating time, specifically, the opening operation time T1 by the clock circuit 33. As illustrated in Fig. 8, the opening operation time T1 is a time period defined from the start of the power supply to the first motor M1 (the second motor M2) for rotating the first movable fins 29 (the second movable fins 30) from the fully closed position to the fully open position to a detection of the lock current generated at the first motor M1 (the second motor M2) for a predetermined time period by the current monitor circuit 37.

Next, the first movable fins 29 (the second movable fins 30) are rotated to the fully closed position so as to measure the operating time, specifically, the closing operation time T2 by the clock circuit 33 in #13. As illustrated in Fig. 8, the closing operation time T2 is a time period defined from the start of the power supply to the first motor M1 (the second motor M2) for rotating the first movable fins 29 (the second movable fins 30) from the fully open position to the fully closed position to a detection of the lock current generated at the first motor M1 (the second motor M2) for a predetermined time period by the current monitor circuit 37.

Then, it is determined whether or not the opening operation time T1 deviates from the specified reference time range for the opening operation, and whether or not the closing operation time T2 deviates from the specified reference time range for the closing operation in #14. In a case where both of the operation times T1 and T2 are prevented from deviating from the respective specified reference time ranges, it is determined that the abnormality is not present at the first movable fins 29 (the second movable fins 30).

In a case where at least one of the operation times T1 and T2 deviates from the corresponding specified reference time range, it is determined that the abnormality is present. An abnormality process such as turning on a warning lamp is performed in #15.

When it is determined that the abnormality is not present, the central processing unit 34 performs the shutter opening and closing control. In the shutter opening and closing control, a cooling water control for controlling the cooling water temperature to be equal to or smaller than a specified temperature and an aerodynamic control for adjusting aerodynamic characteristics of the vehicle are conducted per predetermined time period or per predetermined driving distance of the vehicle.

In the cooling water temperature control, a power supply instruction is input to the motor control circuit 35 so as to supply the electric power to the first motor M1 (the second motor M2) for a predetermined time based on the cooling water temperature input to the communication circuit 38 to thereby rotate the first movable fins 29 (the second movable fins 30) to bring the cooling water temperature to be equal to or smaller than the specified temperature.

The aerodynamic control is performed with a precondition of the cooling water temperature equal to or smaller than the specified temperature. The air penetration to the engine compartment 1 from the front portion of the vehicle is adjusted so as to apply the air resistance, the lift force, or the down force to the vehicle based on the driving speed thereof input to the communication circuit 38. The power supply instruction is input to the motor control circuit 35 for supplying the electric power to the first motor M1 (the second motor M2) for a predetermined time accordingly.

The motor control circuit 35, when receiving the power supply instruction from the central processing unit 34, supplies the electric power to the first motor M1 (the second motor M2) for the predetermined time so as to perform the motor control by which the first movable fins 29 (the second movable fins 30) are rotated from the first end to the second end of the specified operating range.

That is, in the shutter opening and closing control, the central processing unit 34 outputs the power supply instruction to the motor control circuit 35 so as to rotate one of or both of the first movable fins 29 and the second movable fins 30 to the fully closed position as necessary in a case where the first movable fins 29 and/or the second movable fins 30 are in the fully open position. In addition, the central processing unit 34 outputs the power supply instruction to the motor control circuit 35 so as to rotate one of or both of the first movable fins 29 and the second movable fins 30 to the fully open position as necessary in a case where the first movable fins 29 and/or the second movable fins 30 are in the fully closed position.

Next, the abnormality determining means that determine whether or not the abnormality is present at the movable fins 29 and 30 according to a second embodiment will be explained.

According to the abnormality determination program serving as the abnormality determination program, a reference time range is determined on the basis of a correlation map between a driving speed of the vehicle (i.e., a vehicle speed) S and the reference time range defined between the upper time limit TAmax, TBmax, and the lower time limit TAmin, TBmin of the first movable fins 29 (the second movable fins 30) depending on the vehicle speed S.

The memory 32 stores a correlation between the vehicle speed S and the reference time ranges for the opening operation and the closing operation. Fig. 9 illustrates a correlation between the vehicle speed S and the reference time range for the opening operation. As illustrated in Fig. 9, the upper time limit TAmax and the lower time limit TAmin increase in direct proportion to the vehicle speed S. A correlation between the vehicle speed S and the reference time range for the closing operation only differs in a constant of proportion from that of the correlation shown in Fig. 9 and thus an illustration is omitted.

According to the second embodiment, in the initial process of the abnormality determination process in #10 in Fig. 5, the upper time limit TAmax and the lower time limit TAmin of the reference time range for the opening operation depending on the present vehicle speed S are read out from the memory 32 to thereby determine the reference time range for the opening operation. In addition, the upper time limit TBmax and the lower time limit TBmin of the reference time range for the closing direction is read out from the memory 32 to thereby determine the reference time range for the closing direction. The other structure of the second embodiment is the same as the first embodiment.

As an alternative embodiment, the lower time limit of the reference time range may be only corrected to be reduced in a case where the operating speed of the movable fins 29 and/or the movable fins 30 increases, and the upper time limit of the reference time range may be only corrected to be elongated in a case where the operating speed of the movable fins 29 and/or the movable fins 30 decreases.

## Claims

1. A drive unit (A1, A2) for a movable member (29, 30), comprising:
the movable member (29, 30) adjusting aerodynamic characteristics of a vehicle while the movable member (29, 30) is changing a position thereof;
an electric motor (M1, M2) operating the movable member (29, 30);
preventing means (31) preventing the movable member (29, 30) from operating beyond a specified operating range by making contact with the movable member (29, 30); and
controlling means (B) supplying an electric power to the electric motor (M1, M2) for a predetermined time and operating the movable member (29, 30) from a first end to a second end of the specified operating range;
the drive unit is **characterised in that** it further comprises:
abnormality determining means (34) measuring a time period from a start of a power supply to the electric motor (M 1, M2) to a detection of a lock current generated at the electric motor (M1, M2) by a prevention of an operation of the movable member (29, 30) and determining that an abnormality is present at the movable member (29, 30) in a case where the measured time period deviates from a reference time range.

2. The drive unit (A1, A2) according to claim 1, wherein the movable member includes a movable fin (29, 30) adjusting an air entrance to an engine compartment (1) from a front portion of the vehicle, and the abnormality determining means (34) correct the reference time range based on an external factor that affects an operating speed of the movable fin (29, 30).

3. The drive unit (A1, A2) according to claim 2, wherein the external factor includes a power supply voltage (V) of the electric motor (M1, M2), and the abnormality determining means (34) perform a correction to decrease a lower time limit (Tmin) of the reference time range in a case where the power supply voltage (V) is greater than a reference voltage (Vₒ) and perform a correction to increase an upper time limit (Tmax) of the reference time range in a case where the power supply voltage (V) is smaller than the reference voltage (Vₒ).

4. The drive unit (A1, A2) according to one of claims 1 and 2, wherein the abnormality determining means (34) determine the reference time range based on a correlation map between a driving speed of the vehicle (S) and the reference time range of the movable member (29, 30) depending on the driving speed of the vehicle (S).

5. The drive unit according to claim 2, wherein the external factor includes an outside air temperature (Temp), and the abnormality determining means (34) perform a correction to increase the upper time limit (Tmax) of the reference time range in a case where the outside air temperature (Temp) is greater than a reference temperature (Tempo) and perform a correction to decrease the lower time limit (Tmin) of the reference time range in a case where the outside air temperature (Temp) is smaller than the reference temperature (Tempo).

## Patentansprüche

1. Antriebselement (A1, A2) für ein bewegliches Glied (29, 30), aufweisend:
das bewegliche Glied (29, 30), das aerodynamische Eigenschaften eines Fahrzeugs verändert, während das bewegliche Glied (29, 30) eine Position desselben ändert;
einen Elektromotor (M1, M2) zum Betätigen des beweglichen Glieds (29, 30);
Verhinderungsmittel (31) zum Verhindern, dass das bewegliche Glied (29, 30) durch Herstellen von Kontakt mit dem beweglichen Glied (29, 30) über einen spezifizierten Betriebsbereich hinaus operiert; und
Steuermittel (B) zum Bereitstellen von elektrischem Strom an den Elektromotor (M1, M2) während einer im Voraus bestimmten Zeitdauer und Betätigen des beweglichen Glieds (29, 30) von einem ersten Ende zu einem zweiten Ende des spezifizierten Betriebsbereichs;
wobei das Antriebselement **dadurch gekennzeichnet ist, dass** es ferner Folgendes aufweist:
Anomaliebestimmungsmittel (34), die eine Zeitdauer ab dem Beginn einer Stromzufuhr zum Elektromotor (M1, M2) bis zu einem Erkennen eines beim Elektromotor (M1, M2) erzeugten Sperrstroms durch ein Verhindern einer Betätigung des beweglichen Glieds (29, 30) messen und bestimmen, dass eine Anomalie beim beweglichen Glied (29, 30) in dem Fall vorliegt, dass die gemessene Zeitdauer von einem Referenzzeitbereich abweicht.

2. Antriebselement (A1, A2) nach Anspruch 1, wobei das bewegliche Glied eine bewegliche Lamelle (29, 30) ist, die einen Lufteintritt zu einem Motorraum (1) von einem Vorderteil des Fahrzeugs einstellt, und die Anomaliebestimmungsmittel (34) den auf einem externen, eine Betätigungsgeschwindigkeit der Lamelle (29, 30) basierenden Faktor korrigieren.

3. Antriebselement (A1, A2) nach Anspruch 2, wobei der externe Faktor eine Stromzufuhrspannung (V) des Elektromotors (M1, M2) umfasst, und die Anomaliebestimmungsmittel (34) eine Korrektur zum Verringern einer unteren Zeitgrenze (Tmin) des Referenzzeitbereichs in dem Fall, wenn die Stromzufuhrspannung (V) höher als eine Referenzspannung (Vₒ) ist, durchführen, und eine Korrektur zum Erhöhen einer oberen Zeitgrenze (Tmax) des Referenzzeitbereichs in dem Fall, wenn die Stromzufuhrspannung (V) niedriger als eine Referenzspannung (Vₒ) ist, durchführen.

4. Antriebselement (A1, A2) nach einem der Ansprüche 1 und 2, wobei die Anomaliebestimmungsmittel (34) den Referenzzeitbereich auf Basis einer Abbildung der Korrelation zwischen einer Fahrgeschwindigkeit des Fahrzeugs (S) und dem Referenzzeitbereich des beweglichen Glieds (29, 30) in Abhängigkeit von der Fahrgeschwindigkeit des Fahrzeugs (S) bestimmen.

5. Antriebselement nach Anspruch 2, wobei der externe Faktor eine Außenlufttemperatur (Temp) enthält und die Anomaliebestimmungsmittel (34) eine Korrektur zum Erhöhen der oberen Zeitgrenze (Tmax) des Referenzzeitbereichs in dem Fall, wenn die Außenlufttemperatur (Temp) höher ist als eine Referenztemperatur (Temp₀), durchführt und eine Korrektur zum Verringern der unteren Zeitgrenze (Tmin) des Referenzzeitbereichs in dem Fall, wenn die Außenlufttemperatur (Temp) niedriger ist als eine Referenztemperatur (Temp₀), durchführt.

## Revendications

1. Unité d'entraînement (A1, A2) pour un élément mobile (29, 30), comprenant :
l'élément mobile (29, 30) réglant des caractéristiques aérodynamiques d'un véhicule tandis que l'élément mobile (29, 30) change sa position ;
un moteur électrique (M1, M2) faisant fonctionner l'élément mobile (29, 30) ;
un moyen d'empêchement (31) empêchant l'élément mobile (29, 30) de fonctionner au-delà d'une plage de fonctionnement spécifiée en entrant en contact avec l'élément mobile (29, 30) ; et
un moyen de commande (B) alimentant en puissance électrique le moteur électrique (M1, M2) pendant une durée prédéterminée et faisant fonctionner l'élément mobile (29, 30) à partir d'une première extrémité à une deuxième extrémité de la plage de fonctionnement spécifiée ;
l'unité d'entraînement est **caractérisée en ce qu'**elle comprend en outre :
un moyen de détermination d'anomalie (34) mesurant une période entre un début d'une alimentation au moteur électrique (M1, M2) et une détection d'un courant de blocage généré au niveau du moteur électrique (M1, M2) par l'empêchement d'un fonctionnement de l'élément mobile (29, 30) et déterminant qu'une anomalie est présente au niveau de l'élément mobile (29, 30) dans un cas où la période mesurée s'écarte d'une plage temporelle de référence.

2. Unité d'entraînement (A1, A2) selon la revendication 1, dans laquelle l'élément mobile comporte une ailette mobile (29, 30) réglant une entrée d'air à un compartiment moteur (1) à partir d'une partie avant du véhicule, et le moyen de détermination d'anomalie (34) corrige la plage temporelle de référence sur la base d'un facteur externe qui affecte une vitesse de fonctionnement de l'ailette mobile (29, 30).

3. Unité d'entraînement (A1, A2) selon la revendication 2, dans laquelle le facteur externe comporte une tension d'alimentation (V) du moteur électrique (M1, M2), et le moyen de détermination d'anomalie (34) effectue une correction pour diminuer une limite temporelle inférieure (Tmin) de la plage temporelle de référence dans un cas où la tension d'alimentation (V) est supérieure à une tension de référence (V₀) et effectue une correction pour augmenter une limite temporelle supérieure (Tmax) de la plage temporelle de référence dans un cas où la tension d'alimentation (V) est inférieure à la tension de référence (V₀).

4. Unité d'entraînement (A1, A2) selon l'une des revendications 1 et 2, dans laquelle le moyen de détermination d'anomalie (34) détermine la plage temporelle de référence sur la base d'une table de corrélation entre une vitesse d'entraînement du véhicule (S) et la plage temporelle de référence de l'élément mobile (29, 30) en fonction de la vitesse d'entraînement du véhicule (S).

5. Unité d'entraînement selon la revendication 2, dans laquelle le facteur externe comporte une température d'air extérieur (Temp), et le moyen de détermination d'anomalie (34) effectue une correction pour augmenter la limite temporelle supérieure (Tmax) de la plage temporelle de référence dans un cas où la température d'air extérieur (Temp) est supérieure à une température de référence (tempo) et effectue une correction pour diminuer la limite temporelle inférieure (Tmin) de la plage temporelle de référence dans un cas où la température d'air extérieur (Temp) est inférieure à la température de référence (tempo).
